# EUROPÄISCHE PATENTSCHRIFT

(11) **EP 2 531 820 B1**
(45) Veröffentlichungstag und Bekanntmachung des Hinweises auf die Patenterteilung: **31.08.2016**
(21) Anmeldenummer: 11703587.3
(22) Anmeldetag: 26.01.2011
(51) Int. Cl.: G01D 11/28

(54) **ANZEIGEVORRICHTUNG**
DISPLAY DEVICE
DISPOSITIF D'AFFICHAGE

(30) Priorität: 03.02.2010 DE 102010006658
(43) Veröffentlichungstag der Anmeldung: 12.12.2012
(73) Patentinhaber: Johnson Controls Automotive Electronics GmbH, 75196 Remchingen (DE)
(72) Erfinder: RAWER, Marc, 70327 Stuttgart (DE); DUSS, Mike, 76359 Marxzell (DE)
(74) Vertreter: Wolff, Felix
(86) Internationale Anmeldenummer: PCT/EP2011/000326
(87) Internationale Veröffentlichungsnummer: WO 2011/107189

(56) Entgegenhaltungen:
- WO-A1-01/25045
- DE-A1- 3 622 458
- DE-A1- 10 047 083
- US-A1- 2009 136 723

## Beschreibung

Die vorliegende Erfindung betrifft eine Anzeigevorrichtung mit einem Display und einer Frontblende.

Anzeigevorrichtungen mit einem Display sind aus dem Stand der Technik, beispielsweise der US 2009/0136723, bekannt. Anzeigevorrichtungen gemäß dem Stand der Technik, die im Automobilbau eingesetzt werden, weisen in der Regel eine innere Blende aus Metall auf. Diese Blende erfüllt, neben mechanischen Eigenschaften, insbesondere die Funktion eines ESD-(Electro-Statio-Discharge)-Schutzes. Eine derartige Anzeigevorrichtung wird dann noch in der Regel mit einer optischen Blende versehen. Dadurch baut die Anzeige sehr breit und dick und ist insgesamt aufwändig zu fertigen. Darüber hinaus ist sie verschmutzungsanfällig.

Das Dokument DE3622458 offenbart eine Anzeigevorrichtung gemäß den Stand der Technik.

Es war deshalb die Aufgabe der vorliegenden Erfindung, eine Anzeigevorrichtung zur Verfügung zu stellen, die die Nachteile des Standes der Technik nicht aufweist.

Gelöst wird die Aufgabe mit einer Anzeigevorrichtung mit einem Display und einer Frontblende, wobei die Frontblende aus Kunststoff gefertigt und zumindest teilweise mit einer metallischen Beschichtung versehen ist, die mittels physikalischer Gasphasenabscheidung aufgetragen ist, wobei die metallische Beschichtung geerdet ist.

Die vorliegende Erfindung betrifft eine Anzeigevorrichtung, insbesondere eine Anzeigevorrichtung, die im Automobilbau eingesetzt wird. Die erfindungsgemäße Anzeigevorrichtung kann in ein Innenausstattungsteil eines Fahrzeugs, beispielsweise in das Armaturenbrett, eingesetzt sein. Sie kann jedoch auch freistehend, beispielsweise auf dem Armaturenbrett oder der Mittelkonsole, vorgesehen sein. Erfindungsgemäß weist die Anzeigevorrichtung ein Display auf. Vorzugsweise handelt es sich bei dem Display um einen TFT-(Thin-film-Transistor)-Bildschirm oder um einen OLED-Bildschirm. Dieser Bildschirm wird in seinem Randbereich von einer Frontblende umfasst.

Erfindungsgemäß ist diese Frontblende aus Kunststoff vorgesehen und mittels physikalischer Gasphasenabscheidung zumindest abschnittsweise metallisch beschichtet, und die metallische Beschichtung ist elektrisch mit der Karosserie des Fahrzeugs verbunden und somit geerdet, wobei die Erdung vorzugsweise dadurch erfolgt, dass die metallische Beschichtung mit dem Display und das Display wiederum mit der Fahrzeugmasse verbunden ist. Dadurch erfüllt die Frontblende zwei Funktionen. Zum einen sorgt sie für eine Ableitung von elektrischer Aufladung des Displays und zum anderen stellt sie ein Design- und ein Schutzelement dar, das die Anzeigevorrichtung optisch gefälliger macht und eine Verschmutzung bzw. Befeuchtung des Displays verhindert Die erfindungsgemäße Anzeigevorrichtung hat den Vorteil, dass auf die innere Blende aus Metall, die im Stand der Technik vorgesehen ist, verzichtet werden kann. Dadurch baut die erfindungsgemäße Anzeigevorrichtung leichter und kann insgesamt dünner ausgeführt werden. Desweiteren kann die Frontblende näher an dem Display angeordnet werden, wodurch der Spalt zwischen Frontblende und Display verringert ist, was zum einen optische Vorteile hat und zum anderen eine Verschmutzung und/oder das Eindringen und/oder Abscheiden von Feuchtigkeit zwischen Display und Frontblende zumindest vermindert. Dadurch, dass die metallische Beschichtung mittels Gasphasenabscheidung aufgetragen wird, kann diese metallische Beschichtung sehr dünn ausgeführt werden, wodurch die Elastizität des Kunststoffs der Frontblende und/oder ggf. dessen Transparenz zumindest im Wesentlichen erhalten bleibt.

Die metallische Beschichtung wird zumindest abschnittsweise auf die Frontblende aufgetragen. Vorzugsweise wird sie auf der Rückseite, d.h. auf der dem Betrachter der Anzeigevorrichtung abgewandten Seite der Frontblende, aufgetragen.

In einer bevorzugten Ausführungsform ist die Frontblende zumindest abschnittsweise mit einer schwarzen Beschichtung versehen. Vorzugsweise werden Bereiche, die nicht mit einer metallischen Beschichtung versehen sind, mit der schwarzen Beschichtung versehen. Insbesondere wird die dem Betrachter zugewandte Seite der Frontblende zumindest abschnittsweise schwarz beschichtet.

Gemäß einer weiteren oder bevorzugten Ausführungsform der vorliegenden Erfindung ist unterhalb der Frontseite, d.h. auf der dem Betrachter zugewandten Seite der Frontblende, ein Lichtsensor vorgesehen. Diese bevorzugte Ausführungsform der vorliegenden Erfindung hat den Vorteil, dass ein Betrachter, beispielsweise ein Fahrzeuginsasse, den Lichtsensor nicht sieht, so dass die erfindungsgemäße Anzeigevorrichtung insbesondere optisch sehr ansprechend ist. Darüber hinaus schützt die Frontblende den Sensor vor mechanischen- und/oder Umwelteinflüssen. Dadurch, dass die metallische Beschichtung durch physikalische Gasphasenabscheidung aufgetragen wird, ist diese sehr dünn, so dass der Lichtsensor selbst durch die beschichtete Frontblende hindurch die Lichtverhältnisse im Innenraum des Kraftfahrzeuges ermittelt und dieses Signal beispielsweise zur Steuerung der Hintergrundbeleuchtung der Anzeigevorrichtung eingesetzt wird.

Vorzugsweise ist der Lichtsensor in einem Sackloch vorgesehen.

Weiterhin bevorzugt handelt es sich bei dem Lichtsensor um einen Infrarotsensor.

Das erfindungsgemäße Display kann jedes beliebige dem Fachmann bekannte Display sein. Vorzugsweise handelt es sich jedoch um einen sogenannten TFT-Bildschirm (Thin-film Transistor-Bildschirm).

Weiterhin bevorzugt weist die Anzeigevorrichtung rückwärtig ein Gehäuse auf. Diese bevorzugte Ausführungsform der vorliegenden Erfindung ist insbesondere dann vorteilhaft, wenn die erfindungsgemäße Anzeigevorrichtung freistehend, beispielsweise in dem Fahrzeuginnenraum, angeordnet ist

Im Folgenden werden die Erfindungen anhand der Figuren 1 bis 5 erläutert. Diese Erläuterungen sind jedoch lediglich beispielhaft und schränken den allgemeinen Erfindungsgedanken nicht ein. Die Erläuterungen gelten für beide Gegenstände der vorliegenden Erfindung gleichermaßen.
Figur 1 zeigt ein TFT-Modul gemäß dem Stand der Technik.
Figur 2 zeigt eine Anzeigevorrichtung gemäß dem Stand der Technik.
Figur 3 zeigt einen Schnitt durch eine erfindungsgemäße Anzeigevorrichtung.
Figur 4 zeigt einen Schnitt durch eine weitere erfindungsgemäße Anzeigevorrichtung.
Figur 5 zeigt ein vergrößertes Detail X aus Figur 4.

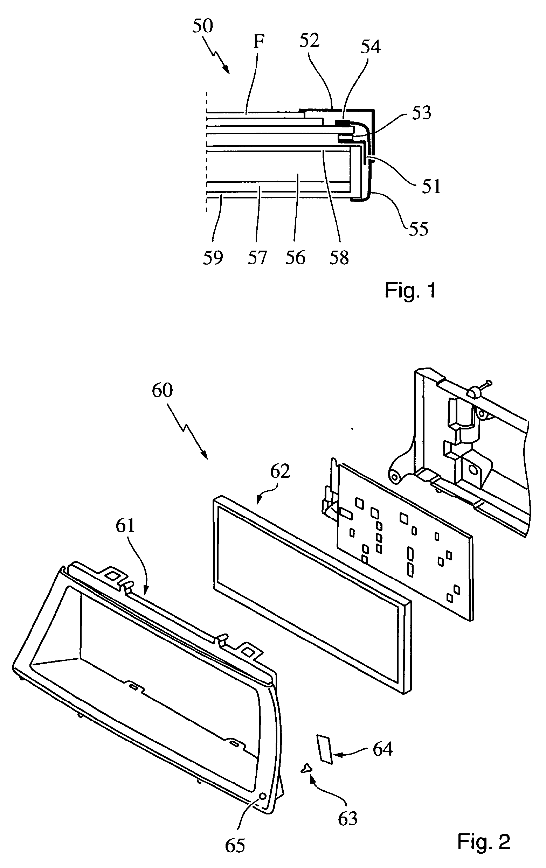

Figur1 zeigt einen Schnitt durch ein bekanntes TFT-(Thin-film-Transistor)-Modul 50. Dieses Modul 50 umfasst eine innere Blende 51, mit der eine elektrische Aufladung, insbesondere der Elektronik des TFT-Moduls, verhindert wird und eine Abschirmung der Elektronik bewirkt wird. Eine Frontblende 52 schützt das bekannte TFT-Modul 50 vor mechanischen und/oder Umwelteinflüssen. Die Frontblende 52 und die innere Blende 51 des TFT-Moduls gemäß dem Stand der Technik sind jeweils aus beispielsweise rostfreiem Stahl oder Aluminium gestanzte Teile. Das bekannte TFT-Modul 50 umfasst. ferner einen Front-Polarisator F, elektronische Ansteuerchips 54, die nach der COG-(Chip-on-Glass)-Technik an dem bekannten TFT-Modul 50 angeordnet bzw. befestigt sind. Eine FPC (Flexible Printed Circuit)-Leiterbahn 55 zu den Ansteuerchips 54, ein Lichtleiter 56, eine Reflektorfolie 57 sowie ein Folienstapel 58, z. B. BEF oder DBEF, sind ebenfalls Bestandteile des bekannten TFT-Moduls. Das Gehäuse 59 ist beispielsweise aus Aluminium hergestellt.

Figur 2 zeigt in einer Explosionsdarstellung eine herkömmliche Anzeigevorrichtung, wie sie beispielsweise aus dem Automobilbau bekannt ist. Die bekannte Anzeigevorrichtung umfasst die Frontblende 61 gemäß dem Stand der Technik, sowie ein bekanntes TFT-Modul 62, sowie einen Lichtleiter 63. Ein Umgebungslichtsensor in Gestalt eines Leiterplatten-Fotosensors 64 liefert Ausgangsdaten, die ausgewertet werden, um eine Hintergrundbeleuchtungsvorrichtung der bekannten Anzeigevorrichtung 60 abhängig von der Helligkeit beispielsweise in dem Fahrzeug anzusteuern. Hierzu ist eine den ästhetischen Gesamteindruck störende Öffnung 65 für den Umgebungslichtsensor in der Frontblende 61 gemäß dem Stand der Technik vorgesehen, in der sich darüber hinaus oftmals Schmutz ansammelt, der die Funktion des Lichtsensors beeinträchtigt.

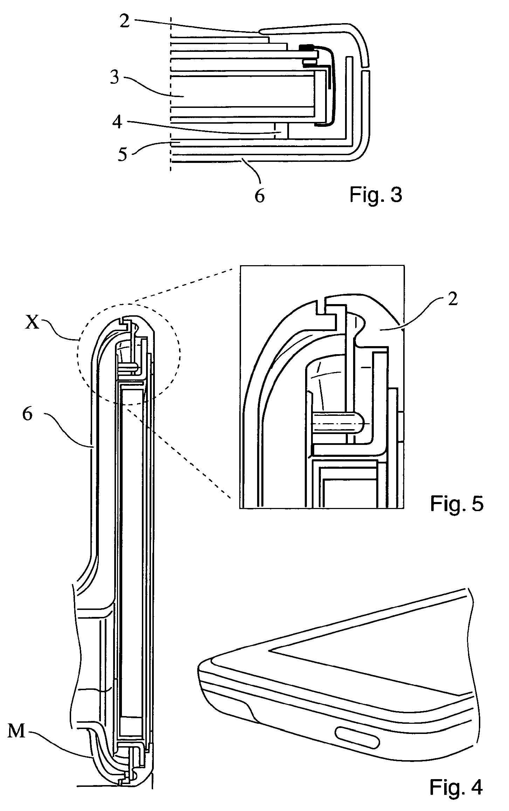

Figur 3 zeigt einen Schnitt durch eine erfindungsgemäß ausgestaltete Anzeigevorrichtung, die beispielsweise ein TFT-Modul 3 umfasst. Die erfindungsgemäß ausgestaltete Frontblende 2 umfasst einen Trägerkörper, der zumindest abschnittsweise, vorzugsweise vollständig aus Kunststoff gefertigt ist. Dieser Träger ist zumindest abschnittsweise mit einer elektrisch leitenden Schicht versehen. Diese elektrisch leitende Schicht ist elektrisch beispielsweise mit der Karosserie des Fahrzeuges verbunden, so dass die elektrisch leitende Schicht die Funktion eines ESD (Electro-Static-Discharge)-Schutzes insbesondere für die integrierten Schaltkreise erfüllt. Die elektrisch leitende Schicht ist erfindungsgemäß mittels physikalischer Gasphasenabscheidung wird auf den Trägerkörper der Frontblende 2 abgelagert. Die bei der erfindungsgemäßen Frontblende 2 vorliegende Kombination von einerseits mechanischen Eigenschaften des Kunststoffs und andererseits elektrischen Eigenschaften bei der Beschichtung kann für eine Vielzahl von Anwendungen von großem Vorteil sein. Zu nennen ist in diesem Zusammenhang, dass beispielsweise die Elastizität des Kunststoffs erhalten bleibt, so dass die Herstellung von beispielsweise Clipverbindungen, bei der es auf die Elastizität des Kunststoffs ankommt, gegeben ist. Darüber hinaus erfüllt die Frontblende die Funktion der Ableitung von elektrischer Aufladung sowie eine elektromagnetische Abschirmfunktion, die angesichts der zunehmenden Empfindlichkeit moderner elektronischer Bauteile zunehmend an Bedeutung gewinnt.

Dadurch, dass bei der erfindungsgemäßen Anzeigevorrichtung auf die innere Blende 51 (vgl. Figur 1) verzichtet werden kann, kann die Frontblende 2 näher an der Oberfläche F des Displays angeordnet werden, was zum einen optische, aber auch zum anderen funktionelle Vorteile hat, da eine Verschmutzung der Vorrichtung bzw. ein Eindringen von Feuchtigkeit zwischen die Frontblende 2 und das Display zumindest vermindert werden kann. Darüber hinaus ist die erfindungsgemäße Vorrichtung leichter herzustellen und weist ein geringeres Gewicht auf, als die Vorrichtung gemäß dem Stand der Technik.

Zur Erreichung eines Black-Panel-Effects kann der erfindungsgemäße Trägerkörper der Frontblende 2 eine Schwarzbeschichtung aufweisen. Beispielsweise kann die mittels PFO abgelagerte Schicht hierzu schwarz eingefärbt sein oder die Schwarzschicht kann separat auf Teile der Frontblende aufgetragen werden, die vorzugsweise nicht mit einer metallischen Beschichtung versehen sind.

Die erfindungsgemäße Frontblende ist mit einer elektrischen Erdung verbunden. Die erfindungsgemäß ausgestattete Anzeigevorrichtung 1 umfasst vorzugsweise ferner einen Träger, insbesondere einen Metallträger und ein Verbindungsmittel 4, mit dem das Display an dem Träger 5 angeordnet ist.

Die bei der Beschreibung gemäß Figur 2 erörterten Nachteile der störenden Öffnung 65 bei Vorrichtungen gemäß dem Stand der Technik kann bei der erfindungsgemäßen Anzeigevorrichtung dadurch vermieden werden, dass mittels physikalischer Gasphasenabscheidung eine sehr dünne Metallisierungsschicht auf die erfingdungsgemäß ausgestalteten Frontblenden abgelagert wird. Hierdurch ergibt sich die Möglichkeit des Einsatzes eines Infrarots-Sensors, der das Umgebungslicht durch die Metallisierungsschicht misst. Der Infrarot-Sensor selbst kann für einen Betrachter nicht sichtbar hinter der erfindungsgemäßen Frontblende angeordnet werden und ist somit insbesondere vor Umwelteinflüssen, beispielsweise Verschmutzung oder Feuchtigkeit geschützt.

Figuren 4 und 5 zeigen einen Schnitt durch eine erfindungsgemäß ausgestaltete Vorrichtung. Die erfindungsgemäße Vorrichtung umfasst u.a. eine 3D-geformte Frontblende 2, die erfindungsgemäß eine mittels physikalischer Gasphasenabscheidung aufgetragene Metallisierungsschicht aufweist. Dadurch kann auf die innere aus Metall ausgeführte Blende (vgl. Figur 1) verzichtet werden. Dadurch baut die Anzeigevorrichtung flacher und ist leichter. Die Frontblende 2 ist mechanisch mit dem Gehäuse 6, insbesondere durch einen Schnappmechanismus, verbunden. Auch bei dieser Vorrichtung ergibt sich die Möglichkeit des Einsatzes eines Infrarot-Sensors, der für den Nutzer nicht sichtbar ist.

### Bezugszeichenliste

- 1: erfindungsgemäß ausgestaltete Anzeigevorrichtung
- 2: erfindungsgemäße Frontblende
- 3: Display, TFT-Modul
- 4: Verbindunsmittel, Verschraubungskuppel
- 5: Träger, Metallträger
- 6: Gehäuse
- 51: innere Blende
- 52: Frontblende
- 53: Klebestreifen
- 54: elektronische Ansteuerchips
- 55: FPC-Leiterbahn
- 56: Lichtleiter
- 57: Reflektorfolie
- 58: Folienstapel
- 59: rückwärtiges Gehäuse
- 60: bekannte Anzeigevorrichtung
- 61: herkömmliche Frontblende
- 62: bekanntes TFT-Modul
- 63: Lichtleiter
- 64: Leiterplatten-Photosensor
- 65: Öffnung
- F: Front-Polarisator
- M: Anzeigevorrichtung
- X: Detail

## Patentansprüche

1. Anzeigevorrichtung (1) mit einem Display (3). und einer Frontblende (2), **dadurch gekennzeichnet, dass** die Frontblende aus Kunststoff gefertigt und **dadurch kennzeichnet, dass** die Frontblende zumindest teilweise mit einer metallischen Beschichtung versehen ist, die mittels physikalischer Gasphasenabscheidung aufgetragen ist und dass die metallische Beschichtung geerdet ist.

2. Anzeigevorrichtung (1) nach Anspruch 1, **dadurch gekennzeichnet, dass** die Frontblende zumindest abschnittsweise eine schwarze Beschichtung aufweist.

3. Anzeigevorrichtung (1) nach dem Oberbegriff von Patentanspruch 1 oder nach einem der voranstehenden Ansprüche, **dadurch gekennzeichnet, dass** unterhalb der Frontseite (2.1) der Frontblende (2) ein Lichtsensor vorgesehen ist.

4. Anzeigevorrichtung (1) nach Anspruch 3, **dadurch gekennzeichnet, dass** der Lichtsensor in einem Sackloch vorgesehen ist.

5. Anzeigevorrichtung nach Anspruch 3 oder 4, **dadurch gekennzeichnet, dass** der Lichtsensor ein Infrarotsensor ist

6. Anzeigevorrichtung (1) nach einem der voranstehenden Ansprüche, **dadurch gekennzeichnet, dass** das Display (3) ein TFT-Bildschirm ist.

7. Anzeigevorrichtung (1) nach einem der voranstehenden Ansprüche, **dadurch gekennzeichnet, dass** sie ein rückwärtiges Gehäuse (59) aufweist.

## Claims

1. Display device (1) having a display (3) and a front panel (2),
**characterized in that**
the front panel is made of plastic and **characterized in that** the front panel is at least partly provided with a metallic coating, which is applied by means of physical vapor deposition and **in that** the metallic coating is grounded.

2. Display device (1) according to Claim 1,
**characterized in that**
the front panel comprises a black coating, at least in some regions.

3. Display device (1) according to the preamble of Claim 1 or according to one of the preceding claims,
**characterized in that**
a light sensor is provided beneath the front (2.1) of the front panel (2).

4. Display device (1) according to Claim 3,
**characterized in that**
the light sensor is provided in a blind hole.

5. Display device according to Claim 3 or 4,
**characterized in that**
the light sensor is an infrared sensor.

6. Display device (1) according to any one of the preceding claims,
**characterized in that**
the display (3) is a TFT visual display unit.

7. Display device (1) according to any one of the preceding claims,
**characterized in that**
it comprises a rear housing (59).

## Revendications

1. Dispositif d'affichage (1) avec un afficheur (3) et un écran frontal (2),
**caractérisé en ce que** l'écran frontal est fabriqué en plastique et **caractérisé en ce que** l'écran frontal est prévu au moins partiellement avec un revêtement métallique qui est appliqué au moyen d'un dépôt physique en phase gazeuse, et **en ce que** le revêtement métallique est mis à la terre.

2. Dispositif d'affichage (1) selon la revendication 1, **caractérisé en ce que** l'écran frontal présente au moins partiellement un revêtement noir.

3. Dispositif d'affichage (1) selon le préambule de la revendication 1 ou selon l'une des revendications précédentes, **caractérisé en ce qu'**un capteur de lumière est prévu au-dessous du côté frontal (2.1) de l'écran frontal (2).

4. Dispositif d'affichage (1) selon la revendication 3, **caractérisé en ce que** le capteur de lumière est prévu dans un trou borgne.

5. Dispositif d'affichage selon la revendication 3 ou 4, **caractérisé en ce que** le capteur de lumière est un capteur infrarouge.

6. Dispositif d'affichage (1) selon l'une des revendications précédentes, **caractérisé en ce que** l'afficheur (3) est un écran TFT.

7. Dispositif d'affichage (1) selon l'une des revendications précédentes, **caractérisé en ce qu'**il présente un boîtier arrière (59).
